# EUROPEAN PATENT SPECIFICATION

(11) **EP 3 112 029 B1**
(45) Date of publication and mention of the grant of the patent: **29.09.2021**
(21) Application number: 15180637.9
(22) Date of filing: 11.08.2015
(51) Int. Cl.: B03C 3/68

(54) **PULSE FIRING PATTERN FOR A TRANSFORMER OF AN ELECTROSTATIC PRECIPITATOR AND ELECTROSTATIC PRECIPITATOR**
IMPULSZÜNDMUSTER FÜR EINEN TRANSFORMATOR EINES ELEKTROSTATISCHEN ABSCHEIDERS UND ELEKTROSTATISCHER ABSCHEIDER
MOTIF DE MISE À FEU D'IMPULSION POUR UN TRANSFORMATEUR D'UN PRÉCIPITATEUR ÉLECTROSTATIQUE ET LEDIT PRÉCIPITATEUR

(30) Priority: 29.06.2015 IN 1922DE2015
(43) Date of publication of application: 04.01.2017
(73) Proprietor: General Electric Technology GmbH, 5400 Baden (CH)
(72) Inventor: Williamsson, Carl Marcus, 34139 Ljungby (SE); Önnerby Pettersson, Inger Elisabeth, 352 42 Vaxjo (SE); Dash, Nanda Kishore, 751003 Bhubaneswar, Odisha (IN); Karlsson, Anders Nils Gustav, 352 51 Vaxjo (SE)
(74) Representative: Wesela-Bauman, Grzegorz

(56) References cited:
- WO-A2-2009/090165
- CN-A- 103 394 412
- JP-A- H0 671 196
- US-A- 4 648 887
- US-A1- 2001 011 499
- TACHIBANA N ET AL: "INTERMITTENT ENERGIZATION ON ELECTROSTATIC PRECIPITATORS", JOURNAL OF ELECTROSTATICS, ELSEVIER SCIENCE PUBLISHERS B.V. AMSTERDAM, NL, vol. 25, no. 1, June 1990 (1990-06), pages 55-73, XP000148332, ISSN: 0304-3886, DOI: 10.1016/0304-3886(90)90037-V
- None

## Description

### TECHNICAL FIELD

The present invention relates to a method for defining a pulse firing pattern for a transformer of an electrostatic precipitator and electrostatic precipitator.

For example, the electrostatic precipitator is of the type used in a power plant or in an industrial application. Other applications with smaller electrostatic precipitators are anyhow possible.

### BACKGROUND

US 464887 discloses a method for controlling an electrostatic precipitator, wherein a rectified secondary voltage is applied to the electrostatic precipitator by alternating an on-load period of a fixed time length corresponding to one or two cycles of the AC source and an off-load period of variable time length.

US 2001/0011499 A1 proposes to define the pulse firing pattern for an electrostatic precipitator dependent from an index of expected performance that is dependent on the product of a peak value and a mean value of an electrode voltage at the precipitator. The duty cycle is adjusted depending on the index of expected performance.

From the article "Intermittent Energization on Electrostatic Precipitators", Tachibana et al., Journal of Electrostatics, Elsevier Science Publishers B.V., Vol. 25, 1990, pages 55 to 73, a method is known that adjusts the duty cycle for the transmission of electric power to the electrodes of an electrostatic precipitator, said method being according to the preamble of the independent claim 1.

JP H06-71196A uses a pulsed operation of an electrostatic precipitator, wherein during an on-time tp voltage pulses are transmitted and during an off-time ts no voltage pulses are transmitted and wherein tp is set to 0,5ts < tp < 3ts.

The method for operating an electrostatic precipitator disclosed in WO 2009/090165 A2 uses a pulse width modulation to keep the peak value of output current below a rated value.

CN 103394412 A generally mentions that a pulse width modulated signal may be used to operate an electrostatic precipitator such that parameters like the output peak voltage, the current and a DC bus voltage are controlled as desired.

Electrostatic precipitators are known to comprise a filter connected to a transformer in turn connected to a rectifier. Typically the transformer and the rectifier are embedded in one single unit. The filter is connected to a power supply, such as to the electric grid; the rectifier is in turn connected to collecting electrodes and discharge electrodes.

During operation the filter receives the electric power from the electric grid (e.g. this electric power can have sinusoidal voltage and current course) and skips some of the half waves of the electric power (e.g. voltage or current) according to a pulse firing pattern, generating a pulsed power that is supplied to the transformer.

The pulse firing pattern is a sequence of first elements indicative of a pulse to be fired and second elements indicative of a pulse to be not fired. The pulse firing pattern is defined as a pulse period or pulse firing pattern length having one first element and an even number of second elements; the pulse period thus has an odd number of elements.

If the transformer is supplied with a pulsed power having two or more successive pulses of the same polarity (i.e. positive or negative), this would cause a risk of saturation of the transformer. For this reason the pulse firing patterns traditionally used have one first element and an even number of second elements.

In addition, traditionally supply of pulsed power was only done to adapt the power sent to the collecting electrodes and discharge electrodes to the properties of the flue gas (e.g. in terms of resistivity), whereas energy management (to regulate the power sent to the collecting electrodes and discharge electrodes) was done by regulating the amplitude of the pulses.

Nevertheless, since when using pulse firing patterns only some but not all power from the electric grid is supplied to the collecting electrodes and discharge electrodes, the pulse firing patterns limit the power supplied to the collecting electrodes and discharge electrodes.

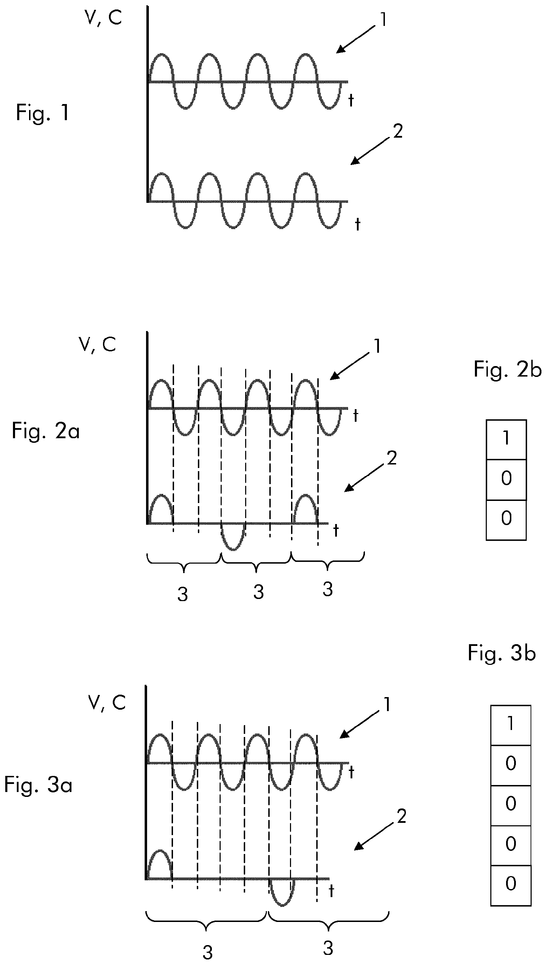

Figures 1, 2a, 2b, 3a, 3b show the voltage or current supplied to the transformer.

Figure 1 shows the case when no pulse firing pattern is applied and all power from the electric grid is supplied to the transformer. In particular, reference 1 identifies the voltage or current supplied from the grid to the filter and reference 2 the voltage or current supplied from the filter to the transformer. In this case 100% of the power from the electric grid is supplied to the transformer and thus to the collecting electrodes and discharge electrodes.

Figure 2a shows the case when the pulse firing pattern of figure 2b is applied at the filter and only 1/3 of the power from the electric grid is forwarded to the transformer, while 2/3 of the power from the electric grid is blocked at the filter and not supplied to the transformer. Also in this case, reference 1 identifies the voltage or current supplied from the grid to the filter and reference 2 the voltage or current supplied from the filter to the transformer. The curly brackets 3 identify the pulse period or pulse firing pattern length. In this case 33% of the power from the electric grid is supplied to the transformer and thus to the collecting electrodes and discharge electrodes.

Figure 3a shows the case when the pulse firing pattern of figure 3b is applied and 1/5 of the power from the electric grid is forwarded to the transformer and 4/5 of the power from the electric grid is blocked at the filter and not supplied to the transformer. In this case as well, reference 1 identifies the voltage or current supplied from the grid to the filter, reference 2 the voltage or current supplied from the filter to the transformer and the curly brackets 3 identify the pulse period or pulse firing pattern length. In this case 20% of the power from the electric grid is supplied to the transformer and thus to the collecting electrodes and discharge electrodes.

It is thus apparent that the step between use of no pulse firing pattern (figure 1) and use of the pulse firing pattern that allows supply of the largest power to the collecting electrodes and discharge electrodes (figure 2a, 2b) corresponds to 67% of the power supplied from the electric grid.

This large power step could not allow optimal operation, because only in case the features of the gas being treated allow supply of the collecting electrodes and discharge electrodes with only 33% of the power supplied from the grid it is possible the use of pulse firing pattern; if use of 33% of the power from the grid is not possible in view of the features of the gas being treated, it is needed operation without pulse firing pattern. In other words, if the features of the gas could require use of a pulse firing pattern corresponding to e.g. 50% of the power from the electric grid, it is not possible operation with the pulse firing pattern, because use of the pulse firing pattern would allow supplying the collecting electrodes and discharge electrodes with only 33% of the power from the electric grid. It would thus be needed operation without pulse firing pattern.

In addition, power regulation made via amplitude reduction (of voltage and/or current), as traditionally done, affects the corona discharge from the discharge electrodes and thus negatively affects dust charging (that occurs via corona) and therefore dust collection at the collecting electrodes.

### SUMMARY

An aspect of the invention includes providing a method to define a pulse firing pattern according to claim 1 and an electrostatic precipitator according to claim 6 that allow an improvement of the regulation of the power supplied to the collecting electrodes and discharge electrodes. Advantageously according to the invention fine regulation can be achieved.

These and further aspects are attained by providing a pulse firing pattern and an electrostatic precipitator in accordance with the accompanying claims.

Advantageously, amplitude regulation (voltage and/or current) is not needed for regulation, such that amplitude regulation does not affect or can be made to affect to a limited extent the corona discharge.

### BRIEF DESCRIPTION OF THE DRAWINGS

Further characteristics and advantages will be more apparent from the description of a preferred but non-exclusive embodiment of the pulse firing pattern and electrostatic precipitator, illustrated by way of nonlimiting example in the accompanying drawings, in which:
Figure 1 shows the voltage or current entering and moving out of a filter when no pulse firing pattern is used (prior art);
Figure 2a shows the voltage or current entering and moving out of a filter when the pulse firing pattern shown in figure 2b is used (prior art);
Figure 2b shows a pulse firing pattern (prior art);
Figure 3a shows the voltage or current entering and moving out of a filter when the pulse firing pattern shown in figure 3b is used (prior art);
Figure 3b shows a pulse firing pattern (prior art);
Figure 4 shows an electrostatic precipitator;
Figures 5a through 5e show different examples of pulse firing patterns;
Figure 6 shows the voltage or current at different positions of the electrostatic precipitator.

### DETAILED DESCRIPTION OF EXEMPLARY EMBODIMENTS

In the following the electrostatic precipitator is described first.

The electrostatic precipitator 9 comprises a filter 10 connected to a power input 11; the filter 10 is arranged for filtering an input power from the power input 11, generating a pulsed power according to a pulse firing pattern.

A control unit 13 is connected to the filter 10 in order to drive it and implement the pulsed firing pattern. For example, the filter can comprise transistors or other types of electronic switches 14.

A transformer 16 is connected to the filter 10; the transformer 16 is arranged for transforming the pulsed power from the filter 10 into a transformed pulsed power.

A rectifier 17 is connected to the transformer 16; the rectifier 17 is arranged for rectifying the transformed pulsed power generating a rectified pulsed power.

Collecting electrodes and discharge electrodes 19 are connected to the rectifier 17 for receiving the rectified pulsed power. The collecting electrodes and discharge electrodes 19 are immersed in a path where the flue gas to be cleaned passes through.

The control unit 10 implements the pulse firing pattern, i.e. drives the electronic switches 14 to pass to an electric conductive state or electric non-conductive state according to the pulsed firing pattern.

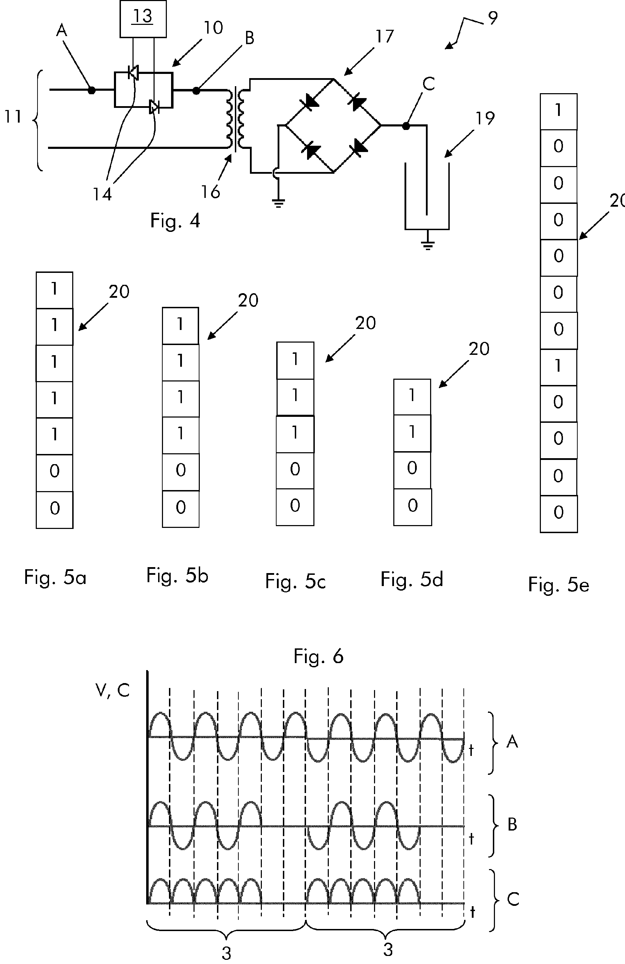

Figures 5a through 5e show some possible pulse firing patterns 20, namely:
- figure 5a shows a pulse firing pattern 20 that allows to transfer 71% of the power from the power input 11 to the transformer 16 and thus to the collecting electrodes and discharge electrodes 19;
- figure 5b shows a pulse firing pattern that allows to transfer 67% of the power from the power input 11 to the transformer 16 and thus to the collecting electrodes and discharge electrodes 19;
- figure 5c shows a pulse firing pattern that allows to transfer 60% of the power from the power input 11 to the transformer 16 and thus to the collecting electrodes and discharge electrodes 19;
- figure 5d shows a pulse firing pattern that allows to transfer 50% of the power from the power input 11 to the transformer 16 and thus to the collecting electrodes and discharge electrodes 19;
- figure 5e shows a pulse firing pattern that allows to transfer 17% of the power from the power input 11 to the transformer 16 and thus to the collecting electrodes and discharge electrodes 19.

Even if only few examples are given above, it is clear that the pulse firing pattern 20 according to the invention can allow to transfer any power from the power input 11 to the transformer 16 and thus to the collecting electrodes and discharge electrodes 19. The pulse firing pattern 20 comprises:
- first elements indicative of a pulse to be fired; these elements are indicated as "1" in the attached figures;
- second elements indicative of a pulse to not be fired, these elements are indicated as "0" in the attached figures.

For example the pulse firing pattern can have less than 20, or less than 1000 or at least 1000 or at least 10000 elements between the first elements and the second elements.

The pulse firing pattern 20 comprises couples of adjacent second elements "0" (i.e. an even number of adjacent elements "0") and at least two first elements "1".

In the following an example of operation using a pulse firing pattern of figure 5a is described. Figure 6 shows the voltage or power at different positions A, B, C of the electrostatic precipitator 9.

The power input 11 (e.g. electric grid) supplies electric power whose voltage or current has e.g. sinusoidal course (fig. 6, position A). At the filter 10 only the half waves in correspondence of a "1" of the pulsed firing pattern 20 are allowed to pass through, whereas half waves in correspondence of "0" of the pulse firing pattern 20 are blocked.

Figure 6, position B shows the voltage or current downstream of the filter 10 and upstream of the transformer 16.

After the transformer, the electric power is rectified at the rectifier 17; Figure 6, position C shows the voltage or current downstream of the rectifier 17.

Implementation of the pulse firing pattern 20 in an electrostatic precipitator 9 allows supply of any power to the collecting electrodes and discharge electrodes 19, but the transformer 16 is not supplied with successive pulses of the same sign such that no saturation of the transformer occurs.

According to the invention, the method for defining a pulse firing pattern allowing to transfer to the collecting electrodes and discharge electrodes a desired or required power comprises:
a) defining a target parameter indicative of the power to be supplied to the collecting electrodes and discharge electrodes 19;
b) calculating a first parameter indicative of the power supplied to the collecting electrodes and discharge electrodes 19 using the pulse firing pattern being calculated, in case one additional pulse is fired,
c) calculating a second parameter indicative of the power supplied to the collecting electrodes and discharge electrodes 19 using the pulse firing pattern being calculated, in case two additional successive pulses are not fired,
d) selecting pattern elements between one first element or two second elements on the basis of the first parameter or second parameter,
e) repeating steps b), c), d), e). Selecting pattern elements is done:
   - on the basis of which parameter between the first parameter or second parameter falls closer to the target parameter or, in case this is not possible, because e.g. none of the first parameter or second parameter falls closer to the target parameter (e.g. the first parameter and second parameter have the same distance from the target parameter).

According to an example not covered by the claimed invention, a given pattern element can be selected; e.g. in this case the pattern element "1" could be selected; alternatively it is also possible to select the pattern element "0".

As for the step e), it is also possible that the step e) also comprises repeating the step a) in addition to repeating steps b) though e). This embodiment of the method thus preferably comprises a continuous calculation of the pulse firing pattern, and the target parameter can be supplied to e.g. the control unit 13 in any moment, such that the continuous calculation allows to have a pulse firing pattern allowing a power transfer to the collecting electrodes and discharge electrodes 19 always moving towards the target parameter.

According to an example not covered by the claimed invention, the continuous repetition can be implemented by defining a pattern period or pulse firing pattern length and calculating the first parameter and the second parameter on the basis of the pattern period or pulse firing pattern length.

For example, a start and an end can be defined in the pulse firing pattern; the start correspond to the element added first to the pulse firing pattern and the end to the element added last to the pulse firing pattern, i.e. the additional elements are added to the end of the pulse firing pattern.

Thus, according to the example not covered by the claimed invention, calculating the first parameter and the second parameter on the basis of the pattern period can comprise:
- calculating the first parameter indicative of the power supplied to the electrostatic precipitator using a pulse firing pattern having
   ∘ the pulse period or pulse firing pattern length, and
   ∘ one additional first element, and
   ∘ deprived of one element at the start;
- calculating a second parameter indicative of the power supplied to the electrostatic precipitator using a pulse firing pattern having
   ∘ the pulse period, and
   ∘ two additional second elements, and
   ∘ deprived of two elements at the start.

Naturally continuous calculation (implementing by the feature e) above) can also be implemented without repeating the step a).

As an alternative, it is also possible discontinuation of the Step e) can be achieved when the first parameter or second parameter becomes equal to the target parameter or when the first parameter and second parameter depart from the target parameter. In this case once one or more pulse firing patterns are calculated, they can be implemented in the electrostatic precipitator, for example different pulse firing patterns can be defined for different flue gas features and power required at the collecting electrodes and discharge electrodes 19.

The control unit 13 implements the pulsed firing pattern 20 and preferably has a computer readable memory medium containing instructions to implement the method.

Naturally the features described may be independently provided from one another.

### REFERENCE NUMBERS

- 1: voltage or current supplied from the grid to the filter
- 2: voltage or current supplied from the filter to the transformer
- 3: pulse firing pattern length
- 9: electrostatic precipitator
- 10: filter
- 11: power input
- 13: control unit
- 14: electronic switch
- 16: transformer
- 17: rectifier
- 19: Collecting electrodes and discharge electrodes
- 20: pulse firing pattern
- A, B, C: positions

## Claims

1. A method for defining a pulse firing pattern (20) for a transformer (16) of an electrostatic precipitator (9) comprising
- first elements ("1") indicative of a half wave of an input voltage or current of a power input (11) to be fired,
- second elements ("0") indicative of a half wave of an input voltage or current of a power input (11) not to be fired,
- the pulse firing pattern (20) defining the power that is transferred from the power input (11) to the transformer (16), wherein the pulse firing pattern (20) comprising couples of adjacent second elements ("0"), and at least two first elements ("1") **characterized in that** the transformer (16) is not supplied with successive half waves of the same sign and the pulse firing pattern (20) is defined by the following steps:
a) defining a target power ratio indicative of the power ratio to be supplied to the collecting electrodes and discharge electrodes (19) of the electrostatic precipitator (9);
b) calculating a first power ratio indicative of the power ratio supplied to the collecting electrodes and discharge electrodes (19) using an initial pulse firing pattern having a length to which one first element is added,
c) calculating a second power ratio indicative of the power ratio supplied to the collecting electrodes and discharge electrodes (19) using the initial pulse firing pattern having the length to which one couple of second elements is added,
d) selecting the pulse firing pattern used in step b) if the first power ratio is closer to the target power ratio and selecting the pulse firing pattern used in step c) if the second power ratio is closer to the target power ratio,
e) repeating steps b), c), d).

2. The method of claim 1, **characterized in that** the pulse firing pattern (20) comprises at least 1000 elements between the first elements and the second elements.

3. The of claim 1, **characterized in that** the pulse firing pattern (20) comprises at least 10000 elements between the first elements and the second elements.

4. The method of claim 1, **characterized in that** the pulse firing pattern (20) comprises less than 20 elements between the first elements and the second elements.

5. The method of claim 1, **characterized in that** the pulse firing pattern (20) comprises less than 1000 elements between the first elements and the second elements.

6. An electrostatic precipitator (9) comprising:
a filter (10) connected to a power input (11), the filter (10) for filtering an input power generating a pulsed power according to a pulse firing pattern (10),
a control unit (13) connected to the filter (10),
a transformer (16) connected to the filter (10), the transformer (16) for transforming the pulsed power into an transformed pulsed power,
a rectifier (17) connected to the transformer (16), the rectifier (17) for rectifying the transformed pulsed power generating a rectified pulsed power,
collecting electrodes and discharge electrodes (19) connected to the rectifier (17) for receiving the rectified pulsed power,
**characterized in that** the control unit (13) is adapted to implement the method according to any of claims 1 to 5.

## Patentansprüche

1. Verfahren zum Definieren eines Impulszündmusters (20) für einen Transformator (16) eines elektrostatischen Abscheiders (9), Folgendes umfassend
- erste Elemente ("1"), die eine zu zündende Halbschwingung einer Eingangsspannung oder eines Eingangsstroms eines Leistungseingangs (11) angeben,
- zweite Elemente ("0"), die eine nicht zu zündende Halbschwingung einer Eingangsspannung oder eines Eingangsstroms eines Leistungseingangs (11) angeben,
- wobei das Impulszündmuster (20) die Leistung definiert, die von dem Leistungseingang (11) zu dem Transformator (16) übertragen wird, wobei das Impulszündmuster (20) Paare von benachbarten zweiten Elementen ("0") und mindestens zwei erste Elemente ("1") umfasst, **dadurch gekennzeichnet, dass** an den Transformator (16) keine aufeinanderfolgenden Halbschwingungen des gleichen Vorzeichens angelegt werden und das Impulszündmuster (20) durch die folgenden Schritte definiert ist:
a) Definieren eines Sollleistungsverhältnisses, das das Leistungsverhältnis angibt, das an die Niederschlagselektroden und Sprühelektroden (19) des elektrostatischen Abscheiders (9) anzulegen ist;
b) Berechnen eines ersten Leistungsverhältnisses, das das Leistungsverhältnis angibt, das an die Niederschlagselektroden und Sprühelektroden (19) unter Verwendung eines anfänglichen Impulszündmusters mit einer Länge, zu der ein erstes Element hinzugefügt ist, angelegt wird,
c) Berechnen eines zweiten Leistungsverhältnisses, das das Leistungsverhältnis angibt, das an die Niederschlagselektroden und Sprühelektroden (19) unter Verwendung eines anfänglichen Impulszündmusters mit einer Länge, zu der ein Paar zweiter Elemente hinzugefügt ist, angelegt wird,
d) Auswählen des in Schritt b) verwendeten Impulszündmusters, falls das erste Leistungsverhältnis näher an dem Sollleistungsverhältnis liegt, und Auswählen des in Schritt c) verwendeten Impulszündmusters, falls das zweite Leistungsverhältnis näher an dem Sollleistungsverhältnis liegt,
e) Wiederholen der Schritte b), c), d).

2. Verfahren nach Anspruch 1, **dadurch gekennzeichnet, dass** das Impulszündmuster (20) zwischen den ersten Elementen und den zweiten Elementen mindestens 1000 Elemente umfasst.

3. Nach Anspruch 1, **dadurch gekennzeichnet, dass** das Impulszündmuster (20) zwischen den ersten Elementen und den zweiten Elementen mindestens 10000 Elemente umfasst.

4. Verfahren nach Anspruch 1, **dadurch gekennzeichnet, dass** das Impulszündmuster (20) zwischen den ersten Elementen und den zweiten Elementen weniger als 20 Elemente umfasst.

5. Verfahren nach Anspruch 1, **dadurch gekennzeichnet, dass** das Impulszündmuster (20) zwischen den ersten Elementen und den zweiten Elementen weniger als 1000 Elemente umfasst.

6. Elektrostatischer Abscheider (9), umfassend:
einen mit einem Leistungseingang (11) verbundenen Filter (10), wobei der Filter (10) zum Filtern einer Eingangsleistung gemäß einem Impulszündmuster (10) eine gepulste Leistung erzeugt,
eine mit dem Filter (10) verbundene Steuereinheit (13),
einen mit dem Filter (10) verbundenen Transformator (16), wobei der Transformator (16) die gepulste Leistung in eine transformierte gepulste Leistung umwandelt,
einen mit dem Transformator (16) verbundenen Gleichrichter (17), wobei der Gleichrichter (17) zum Gleichrichten der transformierten gepulsten Leistung eine gleichgerichtete gepulste Leistung erzeugt,
Niederschlagselektroden und Sprühelektroden (19), die mit dem Gleichrichter (17) zum Aufnehmen der gleichgerichteten gepulsten Leistung verbunden sind,
**dadurch gekennzeichnet, dass** die Steuereinheit (13) dazu eingerichtet ist, das Verfahren nach einem der Ansprüche 1 bis 5 zu implementieren.

## Revendications

1. Procédé pour définir un motif de déclenchement d'impulsions (20) pour un transformateur (16) d'un précipitateur électrostatique (9) comprenant
- des premiers éléments (« 1 ») indicatifs d'une demi-onde d'un(e) tension ou courant d'entrée d'une entrée de puissance (11) à déclencher,
- des deuxièmes éléments (« 0 ») indicatifs d'une demi-onde d'un(e) tension ou courant d'entrée d'une entrée de puissance (11) à ne pas déclencher,
- le motif de déclenchement d'impulsions (20) définissant la puissance qui est transférée de l'entrée de puissance (11) au transformateur (16), dans lequel le motif de déclenchement d'impulsions (20) comprend des couples de deuxièmes éléments adjacents (« 0 »), et au moins deux premiers éléments (« 1 ») **caractérisé en ce que** le transformateur (16) n'est pas alimenté en demi-ondes successives du même signe et le motif de déclenchement d'impulsions (20) est défini par les étapes suivantes :
a) définition d'un rapport de puissance cible indicatif du rapport de puissance à alimenter aux électrodes de collecte et électrodes de décharge (19) du précipitateur électrostatique (9) ;
b) calcul d'un premier rapport de puissance indicatif du rapport de puissance alimenté aux électrodes de collecte et électrodes de décharge (19) en utilisant un motif de déclenchement d'impulsions initial ayant une longueur à laquelle un premier élément est ajouté,
c) calcul d'un deuxième rapport de puissance indicatif du rapport de puissance alimenté aux électrodes de collecte et électrodes de décharge (19) en utilisant le motif de déclenchement d'impulsions initial ayant la longueur à laquelle un couple de deuxièmes éléments est ajouté,
d) sélection du motif de déclenchement d'impulsions utilisé à l'étape b) si le premier rapport de puissance est plus près du rapport de puissance cible et sélection du motif de déclenchement d'impulsions utilisé à l'étape c) si le deuxième rapport de puissance est plus près du rapport de puissance cible,
e) répétition des étapes b), c), d).

2. Procédé selon la revendication 1, **caractérisé en ce que** le motif de déclenchement d'impulsions (20) comprend au moins 1000 éléments entre les premiers éléments et les deuxièmes éléments.

3. selon la revendication 1, **caractérisé en ce que** le motif de déclenchement d'impulsions (20) comprend au moins 10 000 éléments entre les premiers éléments et les deuxièmes éléments.

4. Procédé selon la revendication 1, **caractérisé en ce que** le motif de déclenchement d'impulsions (20) comprend moins de 20 éléments entre les premiers éléments et les deuxièmes éléments.

5. Procédé selon la revendication 1, **caractérisé en ce que** le motif de déclenchement d'impulsions (20) comprend moins de 1000 éléments entre les premiers éléments et les deuxièmes éléments.

6. Précipitateur électrostatique (9) comprenant :
un filtre (10) connecté à une entrée de puissance (11), le filtre (10) destiné à filtrer une puissance d'entrée générant une puissance d'impulsion selon un motif de déclenchement d'impulsions (10),
une unité de commande (13) connectée au filtre (10),
un transformateur (16) connecté au filtre (10), le transformateur (16) destiné à transformer la puissance pulsée en une puissance pulsée transformée,
un redresseur (17) connecté au transformateur (16), le redresseur (17) destiné à redresser la puissance pulsée transformée générant une puissance pulsée redressée,
des électrodes de collecte et électrodes de décharge (19) connectées au redresseur (17) destinées à recevoir la puissance pulsée redressée,
**caractérisé en ce que** l'unité de commande (13) est conçue pour mettre en œuvre le procédé selon l'une quelconque des revendications 1 à 5.
